# EUROPEAN PATENT APPLICATION

(11) **EP 4 122 985 A1**
(43) Date of publication of application: **25.01.2023**
(21) Application number: 21771432.8
(22) Date of filing: 15.03.2021
(51) Int. Cl.: C08L 33/00, D21H 19/10, D21H 19/20, D21H 21/16

(54) **NON-FLUORINATED COPOLYMER COMPOSITION AND OIL-RESISTANT AGENT FOR PAPER**

(30) Priority: 18.03.2020 JP 2020048210
(71) Applicant: Daikin Industries, Ltd., Osaka-shi, Osaka 530-0001 (JP)
(72) Inventor: MATSUDA, Michio, Osaka-shi, Osaka 530-8323 (JP); SAKASHITA, Hirotoshi, Osaka-shi, Osaka 530-8323 (JP); UEHARA, Tetsuya, Osaka-shi, Osaka 530-8323 (JP); NOGUCHI, Daisuke, Osaka-shi, Osaka 530-8323 (JP)
(74) Representative: Hoffmann Eitle
(86) International application number: PCT/JP2021/010447
(87) International publication number: WO 2021/187442

(57) **Abstract**

Provided is a non-fluorinated copolymer composition comprising (1) a non-fluorinated copolymer and (2) acetylene alcohol. The non-fluorinated copolymer (1) preferably contains no styrene skeleton. The non-fluorinated copolymer (1) preferably has (a) repeating units which are formed from an acrylic monomer that has a long-chain hydrocarbon group having 7 to 40 carbon atoms. In addition, the non-fluorinated copolymer (1) preferably has (b) repeating units which are formed from an acrylic monomer that has a hydrophilic group. The non-fluorinated copolymer composition exhibits little foaming during processing and can impart excellent oil resistance and water resistance to a base material.

## Description

### Technical Field

The present disclosure relates to a fluorine-free copolymer composition and a paper oil-resistant agent comprising the fluorine-free copolymer composition.

### Background Art

Hitherto, a composition comprising a fluorine-containing polymer and a compound having a triple bond and a hydroxyl group has been proposed.

Patent Literature 1 (International Publication No. WO 2005/090423) discloses a waterproofing/oil-resistant agent composition comprising a fluorine-containing polymer and an additive which is acetylene glycol or polyoxyalkylene acetylene glycol ether.

Patent Literature 2 (JP 2007-291373 A) discloses a liquid-repellent composition comprising a fluorine-containing polymer and a nonionic surfactant composed of a compound having one or more carbon-carbon triple bonds and one or more hydroxyl groups within the molecule.

None of these patent literatures discloses that a compound having a triple bond and a hydroxyl group is combined with a fluorine-free polymer which is different from the fluorine-containing polymer.

### Citation List

### Patent Literature

Patent Literature 1
   International Publication No. WO 2005/090423
Patent Literature 2
   JP 2007-291373 A (Japanese Patent No. 5200403)

### Summary of Invention

### Technical Problem

An object of the present disclosure is to provide a composition which little foams during treatment and is capable of imparting excellent oil resistance and water resistance to a substrate.

### Solution to Problem

The present disclosure relates to a fluorine-free copolymer composition comprising:
(1) a fluorine-free copolymer, and
(2) an acetylene alcohol.

Preferable embodiments of the present disclosure are as follows.

### Embodiment 1:

A fluorine-free copolymer composition comprising:
(1) a fluorine-free copolymer, and
(2) an acetylene alcohol.

### Embodiment 2:

The fluorine-free copolymer composition according to Embodiment 1, wherein the fluorine-free copolymer (1) is a fluorine-free copolymer having:
a repeating unit formed from (a) an acrylic monomer having a long-chain hydrocarbon group having 7 to 40 carbon atoms.

### Embodiment 3:

The fluorine-free copolymer composition according to Embodiment 2, wherein the fluorine-free copolymer (1) is the fluorine-free copolymer further having:
a repeating unit formed from (b) an acrylic monomer having a hydrophilic group.

### Embodiment 4:

The fluorine-free copolymer composition according to any one of Embodiments 1 to 3, wherein the acrylic monomer having a long-chain hydrocarbon group (a) is a monomer represented by a formula:

CH₂=C(-X¹)-C(=O)-Y¹-(R¹)ₖ

wherein
R¹ is each independently a hydrocarbon group having 7 to 40 carbon atoms,
X¹ is a hydrogen atom, a monovalent organic group, or a halogen atom,
Y¹ is a divalent to tetravalent group composed of at least one selected from a hydrocarbon group having one carbon atom, -C₆H₄-, -O-, -C(=O)-, -S(=O)₂-, or -NH-, provided that a hydrocarbon group is excluded, and
k is 1 to 3.

### Embodiment 5:

The fluorine-free copolymer composition according to Embodiment 4, wherein in the acrylic monomer having a long-chain hydrocarbon group (a), X¹ is a hydrogen atom, and R¹ has 18 or more carbon atoms.

### Embodiment 6:

The fluorine-free copolymer composition according to any one of Embodiments 1 to 5, wherein the acrylic monomer having a long-chain hydrocarbon group (a) is:
(a1) an acrylic monomer represented by a formula:

   CH₂=C(-X⁴)-C(=O)-Y²-R²

   wherein
   R² is a hydrocarbon group having 7 to 40 carbon atoms,
   X⁴ is a hydrogen atom, a monovalent organic group, or a halogen atom, and
   Y² is -O- or -NH-, and/or
(a2) an acrylic monomer represented by a formula:

   CH₂=C(-X⁵)-C(=O)-Y³-Z(-Y⁴-R³)ₙ

   wherein
   R³ is each independently a hydrocarbon group having 7 to 40 carbon atoms,
   X⁵ is a hydrogen atom, a monovalent organic group, or a halogen atom,
   Y³ is -O- or -NH-,
   Y⁴ is each independently a direct bond, or a group composed of at least one selected from -O-, -C(=O)-, - S(=O)₂-, or -NH-,
   Z is a direct bond or a divalent or trivalent hydrocarbon group having 1 to 5 carbon atoms, and
   n is 1 or 2.

### Embodiment 7:

The fluorine-free copolymer composition according to any one of Embodiments 3 to 6, wherein the acrylic monomer having a hydrophilic group (b) is at least one oxyalkylene (meth)acrylate represented by a formula:

CH₂=CX²C(=O)-O-(RO)ₙ-X³ (b1)

CH₂=CX²C(=O)-O-(RO)ₙ-C(=O)CX²=CH₂ (b2),

and/or

CH₂=CX²C(=O)-NH-(RO)ₙ-X³ (b3)

wherein
X² is a hydrogen atom or a methyl group,
X³ is a hydrogen atom or an unsaturated or saturated hydrocarbon group having 1 to 22 carbon atoms,
R is each independently an alkylene group having 2 to 6 carbon atoms, and
n is an integer of 1 to 90.

### Embodiment 8:

The fluorine-free copolymer composition according to any one of Embodiments 3 to 7, wherein the fluorine-free copolymer (1) further has:
a repeating unit formed from (c) an acrylic monomer having an olefinic carbon-carbon double bond and an ion donating group.

### Embodiment 9:

The fluorine-free copolymer composition according to Embodiment 8, wherein the acrylic monomer having an ion donating group (c) is:
(c1) an acrylic monomer having at least one anion donating group selected from the group consisting of a carboxyl group, a sulfonic acid group, and a phosphoric acid group, or
(c2) an acrylic monomer having a cation donating group which is an amino group.

### Embodiment 10:

The fluorine-free copolymer composition according to Embodiment 9, wherein
the acrylic monomer having an anion donating group (c1) is at least one compound selected from the group consisting of (meth)acrylic acid, crotonic acid, maleic acid, fumaric acid, itaconic acid, citraconic acid, vinylsulfonic acid, (meth)allylsulfonic acid, styrenesulfonic acid, phosphoric acid (meth)acrylate, vinylbenzenesulfonic acid, acrylamide tert-butylsulfonic acid, and a salt thereof, and
the acrylic monomer having a cation donating group (c2) is at least one compound selected from the group consisting of dimethylaminoethyl (meth)acrylate, diethylaminoethyl (meth)acrylate, and a salt thereof. Embodiment 11:

The fluorine-free copolymer composition according to any one of Embodiments 8 to 10, wherein an amount of the repeating unit formed from the monomer (a) is 30 to 95% by weight, an amount of the repeating unit formed from the monomer (b) is 5 to 70% by weight, and an amount of the repeating unit formed from the monomer (c) is 0.1 to 30% by weight, based on the fluorine-free copolymer. Embodiment 12:

The fluorine-free copolymer composition according to any one of Embodiments 1 to 11, wherein
the acetylene alcohol (2) is a compound represented by a formula: 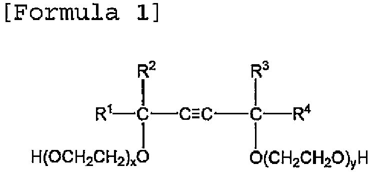 wherein
R¹ and R⁴ are each independently a hydrogen atom or an alkyl group having 1 to 10 carbon atoms,
R² and R³ are each independently a hydrogen atom, a methyl group, or an ethyl group, and
x and y are each independently a number of 0 to 100. Embodiment 13:
   The fluorine-free copolymer composition according to any one of Embodiments 1 to 12, wherein an amount of the acetylene alcohol (2) is 0.1 to 20 parts by weight, based on 100 parts by weight of the fluorine-free polymer (1). Embodiment 14:
   An oil-resistant agent comprising the fluorine-free copolymer composition according to any one of Embodiments 1 to 13.

### Embodiment 15:

An oil-resistant agent kit comprising:
a liquid comprising (1) a fluorine-free copolymer; and
(2) an acetylene alcohol.

### Embodiment 16:

A method for producing the fluorine-free copolymer composition according to any one of Embodiments 1 to 13, the method comprising:
polymerizing an acrylic monomer having a long-chain hydrocarbon group and an acrylic monomer having a hydrophilic group to give a fluorine-free copolymer, and
adding an acetylene alcohol to the fluorine-free copolymer.

### Embodiment 17:

Oil-resistant paper comprising the fluorine-free copolymer of the fluorine-free copolymer composition according to any one of Embodiments 1 to 13, in the paper and/or on a surface of the paper.

### Embodiment 18:

The oil-resistant paper according to Embodiment 17, which is a food packaging material or a food container. Embodiment 19:
A method for eliminating foam during treatment, the method comprising treating paper with the fluorine-free copolymer composition according to any one of Embodiments 1 to 13.

### Advantageous Effects of Invention

The fluorine-free copolymer composition barely foams during treatment and has excellent product stability.

The oil-resistant agent imparts high oil resistance and water resistance to a substrate.

### Description of Embodiment

The fluorine-free copolymer composition contains:
(1) a fluorine-free copolymer, and
(2) an acetylene alcohol.

### (1) Fluorine-free copolymer

The fluorine-free copolymer (1) preferably has:
a repeating unit formed from (a) an acrylic monomer having a long-chain hydrocarbon group having 7 to 40 carbon atoms. In addition, the fluorine-free copolymer (1) preferably has:
a repeating unit formed from (b) an acrylic monomer having a hydrophilic group.

Moreover, the fluorine-free copolymer (1) preferably has a repeating unit formed from (c) a monomer having an ion donating group in addition to the monomers (a) and (b) .

The fluorine-free copolymer (1) may have (d) a repeating unit formed from another monomer in addition to the monomers (a), (b), and (c).

Preferably the fluorine-free copolymer (1) does not have a styrene skeleton. The styrene skeleton means styrene which may or may not be substituted. Substituted styrene includes a compound in which at least one hydrogen atom at the α-position or in the benzene ring of styrene is replaced with a substituent. Preferably the fluorine-free copolymer (1) does not have a repeating unit derived from styrene which may or may not be substituted because the use of styrene as a food additive is prohibited, and it is required in food contact applications that no styrene monomer remains.

### (a) Acrylic monomer having long-chain hydrocarbon group

The acrylic monomer having a long-chain hydrocarbon group (a) has a long-chain hydrocarbon group having 7 to 40 carbon atoms. The long-chain hydrocarbon group having 7 to 40 carbon atoms is preferably a linear or branched hydrocarbon group having 7 to 40 carbon atoms. The number of carbon atoms of the long-chain hydrocarbon group is preferably 10 to 40, such as 12 to 30, particularly 15 to 30. Alternatively, the number of carbon atoms of the long-chain hydrocarbon group may be 18 to 40 or 18 to 30 carbon atoms.

The acrylic monomer having a long-chain hydrocarbon group (a) is preferably a monomer represented by formula:

CH₂=C(-X¹)-C(=O)-Y¹(R¹)ₖ

wherein
R¹ is each independently a hydrocarbon group having 7 to 40 carbon atoms,
X¹ is a hydrogen atom, a monovalent organic group, or a halogen atom,
Y¹ is a divalent to tetravalent group composed of at least one selected from a hydrocarbon group having one carbon atom (particularly, -CH₂-, -CH=), -C₆H₄-, -O-, - C(=O)-, -S(=O)₂-, or -NH-, provided that a hydrocarbon group is excluded, and
k is 1 to 3.

X¹ may be a hydrogen atom, a methyl group, halogen excluding a fluorine atom, a substituted or unsubstituted benzyl group, or a substituted or unsubstituted phenyl group. Examples of X¹ include a hydrogen atom, a methyl group, a chlorine atom, a bromine atom, an iodine atom, and a cyano group. X¹ is preferably a hydrogen atom, a methyl group, or a chlorine atom. X¹ is particularly preferably a hydrogen atom.

Y¹ is a divalent to tetravalent group. Y¹ is preferably a divalent group.

Y¹ is preferably a group composed of at least one selected from a hydrocarbon group having one carbon atom, -C₆H₄-, -O-, -C(=O)-, -S(=O)₂-, or -NH-, provided that a hydrocarbon group is excluded. Examples of the hydrocarbon group having one carbon atom include -CH₂-, - CH= having a branched structure, and -C= having a branched structure.

Y¹ may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-wherein
Y' is a direct bond, -O-, -NH-, or -S(=O)₂-, and
R' is -(CH₂)ₘ- wherein m is an integer of 1 to 5, or -C₆H₄- (a phenylene group) .

Specific examples of Y¹ include -O-, -NH-, -O-C(=O)-, -C(=O)-NH-, -NH-C(=O)-, -O-C(=O)-NH-, -NH-C(=O)-O-, -NH-C(=O) -NH-, -O-C₅H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O- (CH₂)ₘ-O-C(=O) -NH-, -O-(CH₂)ₘ-NH-C(=O) -O-, -O-(CH₂)ₘ-C(=O)-NH-, -O- (CH₂)ₘ-NH-C(=O) -, -O-(CH₂)ₘ-NH-C(=O) -NH-, - O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, -NH-(CH₂)m-NH-C(=O)-O-, -NH-(CH₂)ₘ-C(=O)-NH-, -NH-(CH₂)ₘ-NH-C(=O)-, -NH-(CH₂)ₘ-NH-C(=O) -NH-, -NH-(CH₂)ₘ-O-C₆H₄-, -NH-(CH₂)ₘ-NH-C₆H₄-, -NH-(CH₂)ₘ-NH-S(=O)₂-, or -NH-(CH₂)ₘ-S(=O)₂-NH-, wherein m is 1 to 5, particularly 2 or 4.

Y¹ is preferably --O--, -NH-, -O-(CH₂)ₘ-O-C(=O)-, -O-(CH₂)ₘ-NH-C(=O) -, -O-(CH₂)ₘ-O-C(=O) -NH-, -O-(CH₂)ₘ-NH-C(=O)-O-, -O-(CH₂)ₘ-NH-C(=O) -NH-, -O-(CH₂)ₘ-NH-S(=O)₂-, - O-(CH₂)ₘ-S(=O)₂-NH-, -NH-(CH₂)ₘ-NH-S(=O)₂-, or -NH-(CH₂)ₘ-S(=O)₂-NH- wherein m is an integer of 1 to 5, particularly 2 or 4. Y¹ is more preferably -O- or -O-(CH₂)ₘ-NH-C(=O)-, particularly -O-(CH₂)ₘ-NH-C(=O)-.

R¹ is preferably a linear or branched hydrocarbon group. The hydrocarbon group may be particularly a linear hydrocarbon group. The hydrocarbon group is preferably an aliphatic hydrocarbon group, particularly a saturated aliphatic hydrocarbon group, and especially an alkyl group. The number of carbon atoms of the hydrocarbon group is preferably 12 to 30, such as 16 to 26 or 15 to 26, particularly 18 to 22 or 17 to 22.

Examples of the acrylic monomer having a long-chain hydrocarbon group (a) include:
(a1) an acrylic monomer represented by formula:

   CH₂=C(-X⁴)-C(=O)-Y²-R²

   wherein
   R² is a hydrocarbon group having 7 to 40 carbon atoms,
   X⁴ is a hydrogen atom, a monovalent organic group, or a halogen atom, and
   Y² is -O- or -NH-, and
(a2) an acrylic monomer represented by formula:

   CH₂-C(-X⁵)-C(=O)-Y³-Z(-Y⁴-R³)ₙ

   wherein
   R³ is each independently a hydrocarbon group having 7 to 40 carbon atoms,
   X⁵ is a hydrogen atom, a monovalent organic group, or a halogen atom,
   Y³ is -O- or -NH-,
   Y⁴ is each independently a direct bond, or a group composed of at least one selected from -4-, -C(=O)-, - S(=O)₂-, or -NH-,
   Z is a divalent or trivalent hydrocarbon group having 1 to 5 carbon atoms, and
   n is 1 or 2.

### (a1) Acrylic monomer

The acrylic monomer (a1) is a compound represented by formula:

CH₂=C(-X⁴)-C(=O)-Y²-R²

wherein
R² is a hydrocarbon group having 7 to 40 carbon atoms,
X⁴ is a hydrogen atom, a monovalent organic group, or a halogen atom, and
Y² is -O- or -NH-.

The acrylic monomer (a1) is a long-chain acrylate ester monomer wherein Y² is -O- or a long-chain acrylamide monomer wherein Y² is -NH-.

R² is preferably an aliphatic hydrocarbon group, particularly a saturated aliphatic hydrocarbon group, and especially an alkyl group. In R², the number of carbon atoms of the hydrocarbon group is preferably 12 to 30, such as 16 to 26, particularly 18 to 22. Alternatively, the number of carbon atoms of R² may be 18 to 40 or 18 to 30.

X⁴ may be a hydrogen atom, a methyl group, halogen excluding a fluorine atom, a substituted or unsubstituted benzyl group, or a substituted or unsubstituted phenyl group, and is preferably a hydrogen atom, a methyl group, or a chlorine atom.

Preferable specific examples of the long-chain acrylate ester monomer include lauryl (meth)acrylate, stearyl (meth)acrylate, icosyl (meth)acrylate, behenyl (meth)acrylate, stearyl α-chloroacrylate, icosyl α-chloroacrylate, and behenyl α-chloroacrylate.

Preferable specific examples of the long-chain acrylamide monomer include stearyl (meth)acrylamide, icosyl (meth)acrylamide, and behenyl (meth)acrylamide.

### (a2) Acrylic monomer

The acrylic monomer (a2) is a monomer different from the acrylic monomer (a1). The acrylic monomer (a2) is (meth)acrylate or (meth)acrylamide having a group composed of at least one selected from -O-, -C(=O)-, - S(=O)₂-, or -NH-.

The acrylic monomer (a2) may be a compound represented by formula:

CH₂=C(-X⁵)-C(=O)-Y³-Z(-Y⁴-R³)ₙ

wherein
R³ is each independently a hydrocarbon group having 7 to 40 carbon atoms,
X⁵ is a hydrogen atom, a monovalent organic group, or a halogen atom,
Y³ is -O- or -NH-,
Y⁴ is each independently a direct bond, or a group composed of at least one selected from -O-, -C(=O)-, - S(=O)₂-, or -NH-,
Z is a direct bond or a divalent or trivalent hydrocarbon group having 1 to 5 carbon atoms, and
n is 1 or 2.

R³ is preferably an aliphatic hydrocarbon group, particularly a saturated aliphatic hydrocarbon group, and especially an alkyl group. In R³, the number of carbon atoms of the hydrocarbon group is preferably 12 to 30, such as 16 to 26 or 15 to 26, particularly 18 to 22 or 17 to 22. Alternatively, the number of carbon atoms of R³ may be 18 to 40 or 18 to 30.

X⁵ may be a hydrogen atom, a methyl group, halogen excluding a fluorine atom, a substituted or unsubstituted benzyl group, or a substituted or unsubstituted phenyl group, and is preferably a hydrogen atom, a methyl group, or a chlorine atom.
Y⁴ may be -Y'-, -Y'-Y'-, -Y'-C(=O)-, -C(=O)-Y'-, - Y'-C(=O)-_{Y}'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-wherein
Y¹ is each independently a direct bond, -O-, -NH-, or -S(=O)₂-, and
R' is -(CH₂)ₘ- wherein m is an integer of 1 to 5, a linear hydrocarbon group having 1 to 5 carbon atoms and an unsaturated bond, a hydrocarbon group having 1 to 5 carbon atoms and a branched structure, or -(CH₂)ₗ-C₆H₄-(CH₂)ₗ- wherein l is each independently an integer of 0 to 5, and -C₆H₄- is a phenylene group.

Specific examples of Y⁴ include a direct bond, -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C (=O) --O--, -NH-C(=O)-NH-, -O-C₅H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, - O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH- (CH₂)ₘ-NH-C₆H₄-wherein m is an integer of 1 to 5.

Y⁴ is preferably --O--, -NH-, -O-C(=O)-, -C(=O)-O-, - C(=O)-NH-, -NH-C(=O)-, -NH-S(=O)₂-, -S(=O)₂-NH-, -O-C(=O)-NH-, -NH-C(=O)-O-, -NH-C(=O)-NH-, or -O-C₆H₄-. Y⁴ is more preferably -NH-C(=O)-, -C (=O) --NH-, -O-C(=O)-NH-, -NH-C(=O)-O-, or -NH-C(=O)-NH-.

Z is a direct bond or a divalent or trivalent hydrocarbon group having 1 to 5 carbon atoms, and may have a linear structure or a branched structure. The number of carbon atoms of Z is preferably 2 to 4, particularly 2. Specific examples of Z include a direct bond, -CH₂-, -CH₂CH₂-, -CH₂CH₂CH₂-, -CH₂CH₂CH₂CH₂-, - CH₂CH₂CH₂CH₂CH₂-, -CH₂CH= having a branched structure, - CH₂(CH-)CH₂- having a branched structure, -CH₂CH₂CH= having a branched structure, -CH₂CH₂CH₂CH₂CH= having a branched structure, -CH₂CH₂(CH-)CH₂- having a branched structure, and -CH₂CH₂CH₂CH= having a branched structure.

Z is preferably not a direct bond, and Y⁴ and Z are simultaneously not direct bonds.

The acrylic monomer (a2) is preferably

CH₂=C(-X⁵)-C(=O)-O-(CH₂)ₘ-NH-C(=O)-R³,

CH₂=C(-X⁵)-C(=O)-O-(CH₂)ₘ-O-C(=O)-NH-R³,

CH₂=C(-X⁵)-C(=O)-O-(CH₂)ₘ-NH-C(=O)-O-R³,

or

CH₂=C(-X⁵)-C(=O)-O-(CH₂)ₘ-NH-C(=O)-NH-R³,

wherein R³ and X⁵ are as defined above.

The acrylic monomer (a2) is particularly preferably CH₂=C(-X⁵)-C(=O)-O-(CH₂)ₘ-NH-C(=O)-R³.

The acrylic monomer (a2) can be produced by reacting hydroxyalkyl (meth)acrylate or hydroxyalkyl (meth)acrylamide with long-chain alkyl isocyanate. Examples of the long-chain alkyl isocyanate include lauryl isocyanate, myristyl isocyanate, cetyl isocyanate, stearyl isocyanate, oleyl isocyanate, and behenyl isocyanate.

Alternatively, the acrylic monomer (a2) can also be produced by reacting (meth)acrylate having an isocyanate group in a side chain, such as 2-methacryloyloxyethyl isocyanate, with long-chain alkylamine or long-chain alkyl alcohol. Examples of the long-chain alkylamine include laurylamine, myristylamine, cetylamine, stearylamine, oleylamine, and behenylamine. Examples of the long-chain alkyl alcohol include lauryl alcohol, myristyl alcohol, cetyl alcohol, stearyl alcohol, oleyl alcohol, and behenyl alcohol.

Preferable examples of the long-chain hydrocarbon group-containing acrylic monomer (a) are as follows:
stearyl (meth)acrylate, behenyl (meth)acrylate, stearyl α-chloroacrylate, behenyl α-chloroacrylate;
stearyl (meth)acrylamide, behenyl (meth)acrylamide; 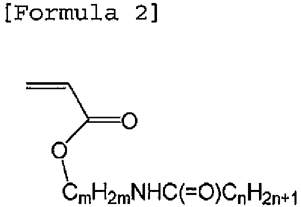 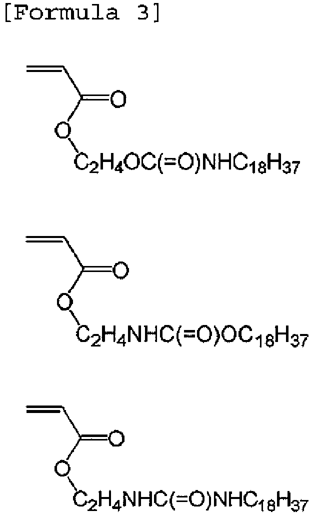 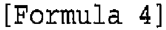 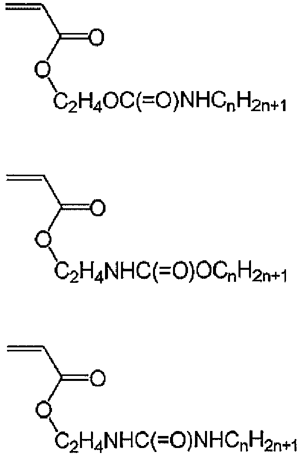 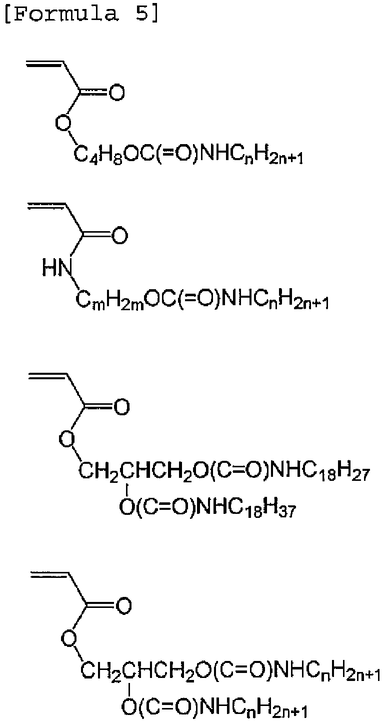 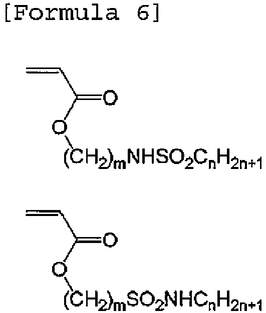
wherein n is a number of 7 to 40, and m is a number of 1 to 5.

While the compounds of the above chemical formulae are acrylic compounds in which the α-position is a hydrogen atom, specific examples may be methacrylic compounds in which the α-position is a methyl group and α-chloroacrylic compounds in which the α-position is a chlorine atom.

The melting point of the acrylic monomer having a long-chain hydrocarbon group (a) is preferably 10°C or higher, and more preferably 25°C or higher.

The acrylic monomer having a long-chain hydrocarbon group (a) is preferably an acrylate in which X¹, X⁴, and X⁵ are hydrogen atoms.

The acrylic monomer (a2) is preferably an amide group-containing monomer represented by formula:

R¹²-C(=O)-NH-R¹³-O-R¹¹

wherein
R¹¹ is an organic residue having an ethylenically unsaturated polymerizable group,
R¹² is a hydrocarbon group having 7 to 40 carbon atoms, and
R¹³ is a hydrocarbon group having 1 to 5 carbon atoms.

R¹¹ is an organic residue having an ethylenically unsaturated polymerizable group, and is not limited as long as there is a carbon-carbon double bond. Specific examples include organic residues having an ethylenically unsaturated polymerizable group such as -C(=O)CR¹⁴=CH₂, - CHR¹⁴=CH₂, and -CH₂CHR¹⁴=CH₂, and R¹⁴ is a hydrogen atom or an alkyl group having 1 to 4 carbon atoms. R¹¹ may have various organic groups other than the ethylenically unsaturated polymerizable group, e.g., organic groups such as chain hydrocarbons, cyclic hydrocarbons, polyoxyalkylene groups, and polysiloxane groups, and these organic groups may be substituted with various substituents. R¹¹ is preferably -C(=O)CR¹⁴=CH₂.

R¹² is a hydrocarbon group having 7 to 40 carbon atoms and preferably an alkyl group, such as a chain hydrocarbon group or a cyclic hydrocarbon group. Among them, a chain hydrocarbon group is preferable, and a linear saturated hydrocarbon group is particularly preferable. The number of carbon atoms of R¹² is 7 to 40, preferably 11 to 27, and particularly preferably 15 to 23.

R¹³ is a hydrocarbon group having 1 to 5 carbon atoms, and preferably an alkyl group. The hydrocarbon group having 1 to 5 carbon atoms may be either linear or branched, may have an unsaturated bond, and is preferably linear. The number of carbon atoms of R¹³ is preferably 2 to 4, and particularly preferably 2. R¹³ is preferably an alkylene group.

The amide group-containing monomer may be a monomer having one type of R¹² (for example, a compound in which R¹² has 17 carbon atoms) or a monomer having a combination of multiple types of R¹² (for example, a mixture of a compound in which R¹² has 17 carbon atoms and a compound in which R¹² has 15 carbon atoms) .

An example of the amide group-containing monomer is carboxylic acid amide alkyl (meth)acrylate.

Specific examples of the amide group-containing monomer include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethylamide (meth)acrylate, oleic acid ethylamide (meth)acrylate, tert-butylcyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether, and mixtures thereof.

The amide group-containing monomer is preferably stearic acid amide ethyl (meth)acrylate. The amide group-containing monomer may be a mixture comprising stearic acid amide ethyl (meth)acrylate. In a mixture comprising stearic acid amide ethyl (meth)acrylate, the amount of stearic acid amide ethyl (meth)acrylate is, for example, 55 to 99% by weight, preferably 60 to 85% by weight, and more preferably 65 to 80% by weight, based on the weight of the total of the amide group-containing monomer, and the remainder of the monomer may be, for example, palmitic acid amide ethyl (meth)acrylate.

### (b) Acrylic monomer having hydrophilic group

The acrylic monomer having a hydrophilic group (b) is a monomer different from the monomer (a), and is a hydrophilic monomer. The hydrophilic group is preferably an oxyalkylene group (the number of carbon atoms of the alkylene group is 2 to 6), particularly an oxyethylene group. Particularly, the acrylic monomer having a hydrophilic group (b) is preferably polyalkylene glycol mono(meth)acrylate, polyalkylene glycol di(meth)acrylate, and/or polyalkylene glycol mono(meth)acrylamide. Oxyalkylene (meth)acrylate is particularly preferable. Polyalkylene glycol mono(meth)acrylate, polyalkylene glycol di(meth)acrylate, and polyalkylene glycol mono(meth)acrylamide are preferably those represented by general formulae:

CH₂=CX²C(=O)-O-(RO)ₙ-X³ (b1)

CH₂=CX²C(=O)-O-(RO)ₙ-C(=O)CX²=CH₂ (b2),

and/or

CH₂=CX²C(=O)-NH- (RO)ₙ-X³ (b3)

wherein
X² is each independently a hydrogen atom or a methyl group,
X³ is each independently a hydrogen atom or an unsaturated or saturated hydrocarbon group having 1 to 22 carbon atoms,
R is each independently an alkylene group having 2 to 6 carbon atoms, and
n is an integer of 1 to 90.

n may be, for example, 1 to 50, particularly 1 to 30, and especially 1 to 15 or 2 to 15. Alternatively, n may be, for example, 1.

R may be a linear or branched alkylene group such as a group represented by formula -(CH₂)ₓ- or -(CH₂)ₓ₁-(CH(CH₃))ₓ₂- wherein x1, and x2 are 0 to 6, such as 2 to 5, and the sum of x1 and x2 is 1 to 6; and the order of - (CH₂)ₓ₁- and-(CH(CH₃))ₓ₂- is not limited to the formula shown, and may be random.

In -(RO)ₙ-, there may be two or more types (such as 2 to 4 types, particularly 2 types) of R, and thus - (RO)ₙ- may be a combination of, for example, -(R¹O)ₙ₁- and -(R²O)ₙ₂- wherein R¹ and R² are mutually different and an alkylene group having 2 to 6 carbon atoms, n1 and n2 are a number of 1 or more, and the sum of n1 and n2 is 2 to 90.

R in general formulae (b1), (b2), and (b3) is particularly preferably an ethylene group, a propylene group, or a butylene group, especially a butylene group. R in general formulae (b1), (b2), and (b3) may be a combination of two or more types of alkylene groups. In this case, at least one R is preferably an ethylene group, a propylene group, or a butylene group. Examples of the combination of R include a combination of an ethylene group/a propylene group, a combination of an ethylene group/a butylene group, and a combination of a propylene group/a butylene group. The monomer (b) may be a mixture of two or more types. In this case, in at least one monomer (b), R in general formula (b1), (b2), or (b3) is preferably an ethylene group, a propylene group, or a butylene group. Polyalkylene glycol di(meth)acrylate represented by general formula (b2) is not preferably used solely as the monomer (b), and is preferably used in combination with the monomer (b1). In this case as well, the compound represented by general formula (b2) is preferably less than 30% by weight in the monomer (b) used.

Specific examples of the acrylic monomer having a hydrophilic group (b) include, but are not limited to, the following.

CH₂=CHCOO-CH₂CH₂O-H

CH₂=CHCOO-CH₂CH₂CH₂O-H

CH₂=CHCOO-CH₂CH(CH₃)O-H

CH₂=CHCOO-CH(CH₃)CH₂O-H

CH₂=CHCOO-CH₂CH₂CH₂CH₂O-H

CH₂=CHCOO-CH₂CH₂CH(CH₃)O-H

CH₂=CHCOO-CH₂CH(CH₃)CH₂O-H

CH₂=CHCOO-CH(CH₃)CH₂CH₂O-H

CH₂=CHCOO-CH₂CH(CH₂CH₃)O-H

CH₂=CHCOO-CH₂C(CH₃)_{2O}-H

CH₂=CHCOO-CH(CH₂CH₃)CH₂O-H

CH₂=CHCOO-C(CH₃)₂CH₂O-H

CH₂=CHCOO-CH(CH₃)CH(CH₃)O-H

CH₂=CHCOO-C(CH₃)(CH₂CH₃)O-H

CH₂=CHCOO-(CH₂CH₂O)₂-H

CH₂=CHCOO-(CH₂CH₂O)₄-H

CH₂=CHCOO-(CH₂CH₂O)₅-H

CH₂=CHCOO-(CH₂CH₂O)₆-H

CH₂=CHCOO-(CH₂CH₂O)₅-CH₃

CH₂=CHCOO-(CH₂CH₂O)₉-CH₃

CH₂=CHCOO-(CH₂CH₂O)₂₃-CH₃

CH₂=CHCOO-(CH₂CH₂O)₉₀-CH₃

CH₂=CHCOO-(CH₂CH(CH₃)O)₉-H

CH₂=CHCOO-(CH₂CH(CH₃)O) ₉-CH₃

CH₂=CHCOO-(CH₂CH(CH₃)O)₁₂-CH₃

CH₂=CHCOO-(CH₂CH₂O)₅-(CH₂CH(CH₃)O)₂-H

CH₂=CHCOO-(CH₂CH₂O)₅-(CH₂CH(CH₃)O)₃-CH₃

CH₂=CHCOO-(CH₂CH₂O)₈-(CH₂CH(CH₃)O)₆-CH₂CH(C₂H₅)C₄H₉

CH₂=CHCOO-(CH₂CH₂O)₂₃-OOC(CH₃)C=CH₂

CH₂=CHCOO-(CH₂CH₂O)₂₀-(CH₂CH(CH₃)O)₅-CH₂-CH=CH₂

CH₂=CHCOO-(CH₂CH₂O)₉-H

CH₂=C(CH₃)COO-CH₂CH₂O-H

CH₂=C(CH₃)COO-CH₂CH₂CH₂O-H

CH₂=C(CH₃)COO-CH₂CH(CH₃)O-H

CH₂=C(CH₃)COO-CH (CH₃)CH₂O-H

CH₂=C(CH₃)COO-CH₂CH₂CH₂CH₂O-H

CH₂=C(CH₃)COO-CH₂CH₂CH(CH₃)O-H

CH₂=C(CH₃)COO-CH₂CH(CH₃)CH₂O-H

CH₂=C(CH₃)COO-CH (CH₃)CH₂CH₂O-H

CH₂=C(CH₃)COO-CH₂CH(CH₂CH₃)O-H

CH₂=C(CH₃)COO-CH₂C(CH₃)₂O-H

CH₂=C(CH₃)COO-CH(CH₂CH₃)CH₂O-H

CH₂=C(CH₃)COO-C(CH₃)₂CH₂O-H

CH₂=C(CH₃)COO-CH(CH₃)CH(CH₃)O-H

CH₂=C(CH₃)COO-C(CH₃)(CH₂CH₃)O-H

CH₂=C(CH₃)COO-(CH₂CH₂O)₂-H

CH₂=C(CH₃)COO-(CH₂CH₂O)₄-H

CH₂=C(CH₃)COO-(CH₂CH₂O)₅-H

CH₂=C(CH₃)COO-(CH₂CH₂O)₆-H

CH₂=C(CH₃)COO-(CH₂CH₂O)₉-H

CH₂=C(CH₃)COO-(CH₂CH₂O)₅-CH₃

CH₂=C(CH₃)COO-(CH₂CH₂O)_{g}-CH₃

CH₂=C(CH₃)COO-(CH₂CH₂O)₂₃-CH₃

CH₂=C(CH₃)COO-(CH₂CH₂O)₉₀-CH₃

CH₂=C(CH₃)COO-(CH₂CH(CH₃)O)₉-H

CH₂=C(CH₃)COO-(CH₂CH(CH₃)O)₉-CH₃

CH₂=C(CH₃)COO-(CH₂CH(CH₃)O)₁₂-CH₃

CH₂=C(CH₃)COO-(CH₂CH₂O)₅-(CH₂CH(CH₃)O)₂-H

CH₂=C(CH₃)COO-(CH₂CH₂O)₅-(CH₂CH(CH₃)O)₃-CH₃

CH₂=C(CH₃)COO-(CH₂CH₂O)₈-(CH₂CH(CH₃)O)₆-CH₂CH(C₂H₅)C₄H₉

CH₂=C(CH₃)COO-(CH₂CH₂O)₂₃-OOC(CH₃)C=CH₂

CH₂=C(CH₃)COO-(CH₂CH₂O)₂₀-(CH₂CH(CH₃)O)₅-CH₂-CH=CH₂

CH₂=CH-C(=O)-NH-CH₂CH₂O-H

CH₂=CH-C(=O)-NH-CH₂CH₂CH₂O-H

CH₂=CH-C(=O)-NH-CH₂CH(CH₃)O-H

CH₂=CH-C(=O)-NH-CH(CH₃)CH₂O-H

CH₂=CH-C(=O)-NH-CH₂CH₂CH₂CH₂O-H

CH₂=CH-C(=O)-NH-CH₂CH₂CH(CH₃)O-H

CH₂=CH-C(=O)-NH-CH₂CH(CH₃)CH₂O-H

CH₂=CH-C(=O)-NH-CH (CH₃)CH₂CH₂O-H

CH₂=CH-C(=O)-NH-CH₂CH(CH₂CH₃)O-H

CH₂=CH-C(=O)-NH-CH₂C(CH₃)₂O-H

CH₂=CH-C(=O)-NH-CH(CH₂CH₃)CH₂O-H

CH₂=CH-C(=O)-NH-C(CH₃)₂CH₂O-H

CH₂=CH-C(=O)-NH-CH(CH₃)CH(CH₃)O-H

CH₂=CH-C(=O)-NH-C(CH₃)(CH₂CH₃)O-H

CH₂=CH-C(=O)-NH-(CH₂CH₂O)₂-H

CH₂=CH-C(=O)-NH-(CH₂CH₂O)₄-H

CH₂=CH-C(=O)-NH-(CH₂CH₂O)₅-H

CH₂=CH-C(=O)-NH-(CH₂CH₂O)₆-H

CH₂=CH-C(=O)-NH-(CH₂CH₂O)₉-H

CH₂=CH-C(=O)-NH-(CH₂CH₂O)₅-CH₃

CH₂=CH-C(=O)-NH-(CH₂CH₂O)₉-CH₃

CH₂=CH-C(=O)-NH-(CH₂CH₂O)₂₃-CH₃

CH₂=CH-C(=O)-NH-(CH₂CH₂O)₉₀-CH₃

CH₂=CH-C(=O)-NH-(CH₂CH(CH₃)O)₉-H

CH₂=CH-C(=O)-NH-(CH₂CH(CH₃)O)₉-CH₃

CH₂=CH-C(=O)-NH-(CH₂CH(CH₃)O)₁₂-CH₃

CH₂=CH-C(=O)-NH-(CH₂CH₂O)₅-(CH₂CH(CH₃)O)₂-H

CH₂=CH-C(=O)-NH-(CH₂CH₂O)₅-(CH₂CH(CH₃)O)₃-CH₃

CH₂=CH-C(=O)-NH-(CH₂CH₂O)₈-(CH₂CH(CH₃)O)₆-CH₂CH(C₂H₅)C₄H₉

CH₂=C(CH₃)-C(=O)-NH-CH₂CH₂O-H

CH₂=C(CH₃)-C(=O)-NH-CH₂CH₂CH₂O-H

CH₂=C(CH₃)-C(=O)-NH-CH₂CH(CH₃)4-H

CH₂=C(CH₃)-C(=O)-NH-CH(CH₃)CH₂O-H

CH₂=C(CH₃)-C(=O)-NH-CH₂CH₂CH₂CH₂O-H

CH₂=C(CH₃)-C(=O)-NH-CH₂CH₂CH(CH₃)O-H

CH₂=C(CH₃)-C(=O)-NH-CH₂CH(CH₃)CH₂O-H

CH₂=C(CH₃)-C (=O)-NH-CH (CH₃)CH₂CH₂O-H

CH₂=C(CH₃)-C(=O)-NH-CH₂CH(CH₂CH₃)O-H

CH₂=C(CH₃)-C(=O)-NH-CH₂C(CH₃)₂O-H

CH₂=C(CH₃)-C (=O)-NH-CH(CH₂CH₃)CH₂O-H

CH₂=C(CH₃)-C(=O)-NH-C(CH₃)₂CH₂O-H

CH₂=C(CH₃)-C(=O)-NH-CH (CH₃)CH(CH₃)O-H

CH₂=C(CH₃)-C(=O)-NH-C(CH₃)(CH₂CH₃)O-H

CH₂=C(CH₃)-C(=O)-NH-(CH₂CH₂O)₂-H

CH₂=C(CH₃)-C(=O)-NH-(CH₂CH₂O)₄-H

CH₂=C(CH₃)-C(=O)-NH-(CH₂CH₂O)₅-H

CH₂=C(CH₃)-C(=O)-NH-(CH₂CH₂O)₆-H

CH₂=C(CH₃)-C(=O)-NH-(CH₂CH₂O)₉-H

CH₂=C(CH₃)-C(=O)-NH-(CH₂CH₂O)₅-CH₃

CH₂=C(CH₃)-C(=O)-NH-(CH₂CH₂O)₉-CH₃

CH₂=C(CH₃)-C(=O)-NH-(CH₂CH₂O)₂₃-CH₃

CH₂=C(CH₃)-C(=O)-NH-(CH₂CH₂O)₉₀-CH₃

CH₂=C(CH₃)-C(=O)-NH-(CH₂CH(CH₃)O)₉-H

CH₂=C(CH₃)-C(=O)-NH-(CH₂CH(CH₃)O)₉-CH₃

CH₂=C(CH₃)-C(=O)-NH-(CH₂CH(CH₃)O)₁₂-CH₃

CH₂=C(CH₃)-C(=O)-NH-(CH₂CH₂O)₅-(CH₂CH(CH₃)O)₂-H

CH₂=C(CH₃)-C(=O)-NH-(CH₂CH₂O)₅-(CH₂CH(CH₃)O)₃-CH₃

CH₂=C(CH₃)-C(=O)-NH-(CH₂CH₂O)₈-(CH₂CH(CH₃)O)₆-CH₂CH(C₂H₅)C₄H₉

The monomer (b) is preferably acrylate or acrylamide in which X² is a hydrogen atom. Particularly, the monomer (b) is preferably hydroxyethyl acrylate, hydroxypropyl acrylate, hydroxybutyl acrylate, or hydroxyethyl acrylamide.

### (C) Monomer having ion donating group

The monomer having an ion donating group (c) is a monomer different from the monomer (a) and the monomer (b). The monomer (c) is preferably a monomer having an olefinic carbon-carbon double bond and an ion donating group (particularly, an acrylic monomer). The ion donating group is an anion donating group and/or a cation donating group.

Examples of the monomer having an anion donating group include monomers having a carboxyl group, a sulfonic acid group, or a phosphoric acid group. Specific examples of the monomer having an anion donating group include (meth)acrylic acid, crotonic acid, maleic acid, fumaric acid, itaconic acid, citraconic acid, vinyl sulfonic acid, (meth)allylsulfonic acid, styrenesulfonic acid, phosphoric acid (meth)acrylate, vinylbenzenesulfonic acid, acrylamide tert-butyl sulfonic acid, and salts thereof.

Examples of salts of the anion donating group include alkali metal salts, alkaline earth metal salts, and ammonium salts, such as a methyl ammonium salt, an ethanol ammonium salt, and a triethanol ammonium salt.

In the monomer having a cation donating group, examples of the cation donating group include an amino group and preferably a tertiary amino group and a quaternary amino group. In the tertiary amino group, two groups bonded to the nitrogen atom are the same or different and are preferably an aliphatic group having 1 to 5 carbon atoms (particularly an alkyl group), an aromatic group having 6 to 20 carbon atoms (an aryl group), or an araliphatic group having 7 to 25 carbon atoms (particularly an aralkyl group such as a benzyl group (C₆H₅-CH₂-)). In the quaternary amino group, three groups bonded to the nitrogen atom are the same or different and are preferably an aliphatic group having 1 to 5 carbon atoms (particularly an alkyl group), an aromatic group having 6 to 20 carbon atoms (an aryl group), or an araliphatic group having 7 to 25 carbon atoms (particularly an aralkyl group such as a benzyl group (C₆H₅-CH₂-)). In the tertiary and quaternary amino groups, the remaining one group bonded to the nitrogen atom may have a carbon-carbon double bond. The cation donating group may be in the form of a salt.

A cation donating group which is a salt is a salt formed with an acid (an organic acid or an inorganic acid). Organic acids such as carboxylic acids having 1 to 20 carbon atoms (particularly, monocarboxylic acids such as acetic acid, propionic acid, butyric acid, and stearic acid) are preferable. Dimethylaminoethyl (meth)acrylate, diethylaminoethyl (meth)acrylate, and salts thereof are preferable.

Specific examples of the monomer having a cation donating group are as follows.
CH₂=CHCOO-CH₂CH₂-N(CH₃)₂ and salts thereof (such as acetate)
CH₂=CHCOO-CH₂CH₂-N(CH₂CH₃)₂ and salts thereof (such as acetate)
CH₂=C(CH₃)COO-CH₂CH₂-N(CH₃)₂ and salts thereof (such as acetate)
CH₂=C(CH₃)COO-CH₂CH₂-N(CH₂CH₃)₂ and salts thereof (such as acetate)
CH₂=CHC(O)N(H)-CH₂CH₂CH₂-N(CH₃)₂ and salts thereof (such as acetate)
CH₂=CHCOO-CH₂CH₂-N(-CH₃)(-CH₂-C₆H₅) and salts thereof (such as acetate)
CH₂=C(CH₃)COO-CH₂CH₂-N(-CH₂CH₃)(-CH₂-C₆H₅) and salts thereof (such as acetate)
CH₂=CHCOO-CH₂CH₂-N⁺(CH₃)₃Cl⁻
CH₂=CHCOO-CH₂CH₂-N⁺(-CH₃)₂(-CH₂-C₆H₅)Cl⁻
CH₂=C(CH₃)COO-CH₂CH₂-N⁺(CH₃)₃Cl⁻
CH₂=CHCOO-CH₂CH(OH)CH₂-N⁺(CH₃)₃Cl⁻
CH₂=C(CH₃)COO-CH₂CH(OH)CH₂-N⁺(CH₃)₃Cl⁻
CH₂=C(CH₃)COO-CH₂CH(OH)CH₂-N⁺(-CH₂CH₃)₂(-CH₂-C₆H₅)Cl⁻
CH₂=C(CH₃)COO-CH₂CH₂-N⁺(CH₃)₃Br⁻
CH₂=C(CH₃)COO-CH₂CH₂-N⁺(CH₃)₃I⁻
CH₂=C(CH₃)COO-CH₂CH₂-N⁺(CH₃)₃O⁻SO₃CH₃
CH₂=C(CH₃)COO-CH₂CH₂-N⁺(CH₃)(-CH₂-C₆H₅)₂Br⁻

The monomer having an ion donating group (c) is preferably methacrylic acid, acrylic acid, and dimethylaminoethyl methacrylate, and more preferably methacrylic acid and dimethylaminoethyl methacrylate.

### (d) Another monomer

Another monomer (d) is a monomer different from the monomers (a), (b), and (c) . Examples of such another monomer include ethylene, vinyl acetate, vinyl chloride, vinyl fluoride, halogenated vinyl styrene, α-methylstyrene, p-methylstyrene, polyoxyalkylene mono(meth)acrylate, (meth)acrylamide, diacetone (meth)acrylamide, methylollated (meth)acrylamide, N-methylol (meth)acrylamide, alkyl vinyl ether, halogenated alkyl vinyl ether, alkyl vinyl ketone, butadiene, isoprene, chloroprene, glycidyl (meth)acrylate, aziridinyl (meth)acrylate, benzyl (meth)acrylate, isocyanate ethyl (meth)acrylate, cyclohexyl (meth)acrylate, isobornyl (meth)acrylate, short-chain alkyl (meth)acrylate, maleic anhydride, (meth)acrylate having a polydimethylsiloxane group, and N-vinylcarbazole.

Examples of the combinations of monomers constituting the repeating units of the fluorine-free copolymer are as follows:
Monomer (a)
Monomer (a) + Monomer (b)
Monomer (a) + Monomer (c)
Monomer (a) + Monomer (b) + Monomer (c)
Monomer (a) + Monomer (b) + Monomer (d)
Monomer (a) + Monomer (c) + Monomer (d)
Monomer (a) + Monomer (b) + Monomer (c) + Monomer (d)

The combination of monomers constituting the repeating units of the fluorine-free polymer is preferably "monomer (a) + monomer (b) + monomer (c)".

The amount of the repeating unit formed from the monomer (a) (repeating unit (a)) may be 30 to 95% by weight or 30 to 90% by weight, preferably 40 to 88% by weight (or 45 to 95% by weight), and more preferably 50 to 85% by weight, based on the fluorine-free copolymer (or based on the total of the repeating unit (a) and the repeating unit (b)). Alternatively, the amount of the repeating unit formed from the monomer (a) (repeating unit (a)) may be 30 to 95% by weight, preferably 50 to 88% by weight or 55 to 85% by weight, and more preferably 60 to 85% by weight, based on the fluorine-free copolymer.

The amount of the repeating unit formed from the monomer (b) (repeating unit (b)) may be 5 to 70% by weight or 10 to 70% by weight, preferably 8 to 50% by weight, and more preferably 10 to 40% by weight, based on the fluorine-free copolymer (or based on the total of the repeating unit (a) and the repeating unit (b)). Alternatively, the amount of the repeating unit formed from the monomer (b) (repeating unit (b)) may be 5 to 70% by weight, preferably 8 to 50% by weight or 10 to 40% by weight, and more preferably 10 to 30% by weight, based on the fluorine-free copolymer (or based on the total of the repeating unit (a) and the repeating unit (b)).

The amount of the repeating unit formed from the monomer (c) (repeating unit (c)) may be 30% by weight or less or 0.1 to 30% by weight, preferably 0.5 to 20% by weight, and more preferably 1 to 15% by weight or 2 to 12% by weight, based on the fluorine-free copolymer.

The amount of the repeating unit formed from the monomer (d) (repeating unit (d)) may be 0 to 20% by weight, such as 1 to 15% by weight, particularly 2 to 10% by weight, based on the fluorine-free copolymer.

The weight average molecular weight of the fluorine-free copolymer may be 1,000 to 1,000,000 or 10,000,000, preferably 5,000 to 800,000 or 8,000,000, and more preferably 10,000 to 400,000 or 4,000,000. The weight average molecular weight is a value obtained in terms of polystyrene by gel permeation chromatography.

Herein, "(meth)acryl" means acryl or methacryl. For example, "(meth)acrylate" means acrylate or methacrylate.

From the viewpoint of oil resistance, the fluorine-free copolymer is preferably a random copolymer rather than a block copolymer.

The melting point or the glass transition point of the fluorine-free copolymer is preferably 20°C or higher, more preferably 30°C or higher, and particularly preferably 35°C or higher, such as 40°C or higher.

The dynamic viscoelasticity (the complex viscosity) of the fluorine-free copolymer at 90°C is preferably 10 to 5,000 Pa·s, such as 20 to 3,000 Pa·s, particularly 50 to 1,000 Pa·s. The dynamic viscoelasticity (the complex viscosity) of the fluorine-free copolymer at 70°C is preferably 500 to 100,000 Pa·s, particularly 1,000 to 50,000 Pa·s. Also, the dynamic viscoelasticity (the complex viscosity) of the fluorine-free copolymer at 80 to 90°C is preferably 10 to 5,000 Pa·s, such as 20 to 3,000 Pa·s, particularly 50 to 1,000 Pa·s.

### (2) Acetylene alcohol

The acetylene alcohol (2) is a compound having one or more carbon-carbon triple bonds and one or more hydroxyl groups.

The acetylene alcohol (2) is preferably a compound represented by the formula: 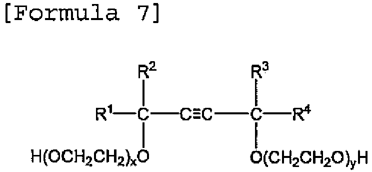 wherein
R¹ and R⁴ are each independently a hydrogen atom or an alkyl group having 1 to 10 carbon atoms,
R² and R³ are each independently a hydrogen atom, a methyl group, or an ethyl group, and
x and y are each independently a number of 0 to 100.

R¹ and R⁴ are preferably each independently an alkyl group having 2 to 10, such as 3 to 8 or 4 to 6 carbon atoms. Preferable specific examples of R¹ and R⁴ include butyl groups, such as a n-butyl group, an isobutyl group, and a t-butyl group.

R² and R³ are preferably each independently a methyl group.

x and y may each independently be 0, and are preferably 1 to 80, such as 3 to 60. Polyoxyethylene acetylene glycol ether having an ethylene oxide group (the acetylene alcohol (2) having an ethylene oxide group) imparts high oil resistance and defoamability.

Specific examples of the acetylene alcohol (2) include 2,5-dimethyl-3-hexyne-2,5-diol, 3,6-dimethyl-4-octyne-3,6-diol, 2,4,7,9-tetramethyl-5-decyne-4,7-diol, 3-hexyne-2,5-diol, and 2-butyne-1,4-diol. Examples also include polyethoxylates and ethylene oxide adducts of these specific exemplary compounds. The ethylene oxide adduct of 2,4,7,9-tetramethyl-5-decyne-4,7-diol is particularly preferable.

The acetylene alcohol (2) can be produced as follows.

The acetylene alcohol (2) having an ethylene oxide group can be produced by reacting tertiary acetylene glycol, carbinol, or a mixture thereof with ethylene oxide in the presence of a basic catalyst, such as triethylamine.

Tertiary acetylene glycol or carbinol can be produced by reacting calcium carbide, alkali metal hydroxide, and ketone. Tertiary acetylene glycol corresponds to the acetylene alcohol (2) having no ethylene oxide group.

The amount of the acetylene alcohol (2) may be 0.1 to 20 parts by weight or 0.2 to 15 parts by weight, such as 0.3 to 10 parts by weight, 0.5 to 8 parts by weight, or 1 to 5 parts by weight, based on 100 parts by weight of the fluorine-free polymer (1). Alternatively, the amount of the acetylene alcohol (2) is 0.1 to 10 parts by weight, 0.2 to 5 parts by weight, or 0.3 to 3 parts by weight, based on 100 parts by weight of the fluorine-free polymer (1).

Alternatively, the amount of the acetylene alcohol (2) is 0.01 to 10 parts by weight, such as 0.05 to 5 parts by weight or 0.1 to 2 parts by weight, based on 100 parts by weight of the fluorine-free polymer composition (or a liquid comprising the fluorine-free polymer).

Polymerization for the fluorine-free copolymer is not limited, and various polymerization methods can be selected, such as bulk polymerization, solution polymerization, emulsion polymerization, and radiation polymerization. For example, in general, solution polymerization involving an organic solvent, and emulsion polymerization involving water or involving an organic solvent and water in combination, are selected. The fluorine-free copolymer after polymerization is diluted with water to be emulsified in water and thus formed into a treatment liquid.

It is preferable that after polymerization involving an organic solvent as a medium (for example, solution polymerization or emulsion polymerization, preferably solution polymerization) is carried out, water is added, and then the solvent is removed to disperse the polymer in water. An emulsifier does not need to be added, and a self-dispersive product can be produced.

The acetylene alcohol (2) can function as a surfactant, and thus the fluorine-free copolymer composition can be obtained by polymerizing the fluorine-free copolymer in the presence of the acetylene alcohol (2). Alternatively, after the fluorine-free copolymer is produced, the acetylene alcohol (2) may be added to a liquid (a solution or a dispersion) comprising the fluorine-free copolymer.

The fluorine-free copolymer composition may be in the form of a kit in which the fluorine-free polymer (1) and the acetylene alcohol (2) are present mutually independently. For example, the kit comprises a liquid (especially an aqueous dispersion) comprising the fluorine-free polymer (1), and the acetylene alcohol (2).

Examples of organic solvents include ketones such as acetone and methyl ethyl ketone, esters such as ethyl acetate and methyl acetate, glycols such as propylene glycol, dipropylene glycol monomethyl ether, N-methyl-2-pyrrolidone (NMP), dipropylene glycol, tripropylene glycol, and low molecular weight polyethylene glycol, and alcohols such as ethyl alcohol and isopropanol.

For example, peroxide, an azo compound, or a persulfate compound can be used as a polymerization initiator. The polymerization initiator is, in general, water-soluble and/or oil-soluble.

Specific examples of the oil-soluble polymerization initiator preferably include 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexan-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, and t-butyl perpivalate.

Specific examples of the water-soluble polymerization initiator preferably include 2,2'-azobisisobutylamidine dihydrochloride, 2,2'-azobis(2-methylpropionamidine) hydrochloride, 2,2'-azobis[2-(2-imidazolin-2-yl)propane] hydrochloride, 2,2'-azobis[2-(2-imidazolin-2-yl)propane] sulfate hydrate, 2,2'-azobis[2-(5-methyl-2-imidazolin-2-yl)propane] hydrochloride, potassium persulfate, barium persulfate, ammonium persulfate, and hydrogen peroxide.

The polymerization initiator is used in the range of 0.01 to 5 parts by weight, based on 100 parts by weight of the monomers.

In order to regulate the molecular weight, a chain transfer agent such as a mercapto group-containing compound may be used, and specific examples thereof include 2-mercaptoethanol, thiopropionic acid, and alkyl mercaptan. The mercapto group-containing compound is used in the range of 10 parts by weight or less, or 0.01 to 5 parts by weight, based on 100 parts by weight of the monomers.

Specifically, the fluorine-free copolymer can be produced as follows.

In solution polymerization, a method is employed which involves dissolving the monomers in an organic solvent, performing nitrogen purge, then adding a polymerization initiator, and heating and stirring the mixture, for example, in the range of 40 to 120°C for 1 to 10 hours. The polymerization initiator may be, in general, an oil-soluble polymerization initiator.

The organic solvent is inert to and dissolves the monomers, and examples include ketones such as acetone and methyl ethyl ketone, esters such as ethyl acetate and methyl acetate, glycols such as propylene glycol, dipropylene glycol monomethyl ether, N-methyl-2-pyrrolidone (NMP), dipropylene glycol, tripropylene glycol, and low molecular weight polyethylene glycol, alcohols such as ethyl alcohol and isopropanol, and hydrocarbon solvents such as n-heptane, n-hexane, n-octane, cyclohexane, methylcyclohexane, cyclopentane, methylcyclopentane, methylpentane, 2-ethylpentane, isoparaffin hydrocarbon, liquid paraffin, decane, undecane, dodecane, mineral spirit, mineral turpen, and naphtha. Preferable examples of the solvent include acetone, chloroform, HCHC 225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane, trichlorotrifluoroethane, N-methyl-2-pyrrolidone (NMP), and dipropylene glycol monomethyl ether (DPM). The organic solvent is used in the range of 50 to 2,000 parts by weight, such as 50 to 1,000 parts by weight, based on total 100 parts by weight of the monomers.

In emulsion polymerization, a method is employed which involves emulsifying the monomers in water in the presence of an emulsifier, performing nitrogen purge, then adding a polymerization initiator, and stirring the mixture in the range of 40 to 80°C for 1 to 10 hours for polymerization. The polymerization initiator may be a water-soluble polymerization initiator such as 2,2'-azobisisobutylamidine dihydrochloride, 2,2'-azobis(2-methylpropionamidine) hydrochloride, 2,2'-azobis[2-(2-imidazolin-2-yl)propane] hydrochloride, 2,2'-azobis[2-(2-imidazolin-2-yl)propane] sulfate hydrate, 2,2'-azobis[2-(5-methyl-2-imidazolin-2-yl)propane] hydrochloride, potassium persulfate, barium persulfate, ammonium persulfate, or hydrogen peroxide; or an oil-soluble polymerization initiator such as 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexan-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, or t-butyl perpivalate. The polymerization initiator is used in the range of 0.01 to 10 parts by weight, based on 100 parts by weight of the monomers.

In order to obtain a water dispersion of the polymer, which has excellent stability when being left to stand, it is desirable that the monomers are formed into fine particles in water by using an emulsifying apparatus capable of applying strong crushing energy such as a high-pressure homogenizer or an ultrasonic homogenizer, and polymerized by using an oil-soluble polymerization initiator. Various anionic, cationic, or nonionic emulsifiers can be used as emulsifiers, and are used in the range of 0.5 to 20 parts by weight, based on 100 parts by weight of the monomers. An anionic and/or nonionic and/or cationic emulsifier is preferably used. When the monomers are not completely compatible, a compatibilizer such as a water-soluble organic solvent or a low molecular weight monomer which causes the monomers to be sufficiently compatible is preferably added. By adding a compatibilizer, emulsifiability and copolymerizability can be increased.

Examples of the water-soluble organic solvent include acetone, propylene glycol, dipropylene glycol monomethyl ether (DPM), dipropylene glycol, tripropylene glycol, ethanol, N-methyl-2-pyrrolidone (NMP), 3-methoxy-3-methyl-1-butanol, or isoprene glycol, and the water-soluble organic solvent may be used in the range of 1 to 50 parts by weight, such as 10 to 40 parts by weight, based on 100 parts by weight of water. By adding NMP or DPM or 3-methoxy-3-methyl-1-butanol or isoprene glycol (a preferable amount is, for example, 1 to 20% by weight, and particularly 3 to 10% by weight, based on the composition), the stability of the composition (particularly, the emulsion) is increased. Examples of the low molecular weight monomer include methyl methacrylate, glycidyl methacrylate, and 2,2,2-trifluoroethyl methacrylate, and the low molecular weight monomer may be used in the range of 1 to 50 parts by weight, such as 10 to 40 parts by weight, based on total 100 parts by weight of the monomers.

The fluorine-free copolymer composition is preferably in the form of a solution, an emulsion, or an aerosol. The fluorine-free copolymer composition comprises the fluorine-free copolymer and a medium (for example, a liquid medium such as an organic solvent or water). The fluorine-free copolymer composition is preferably an aqueous dispersion of the fluorine-free copolymer. In the fluorine-free copolymer composition, the concentration of the fluorine-free copolymer may be, for example, 0.01 to 50% by weight.

Removal of the organic solvent in the polymer solution can be performed by heating the polymer solution (for example, to 30°C or higher, such as 50 to 120°C) (preferably under reduced pressure).

The fluorine-free copolymer composition can be used to treat (for example, to surface-treat) the paper substrate.

The fluorine-free copolymer composition can be applied to the treatment target substrate by a conventionally known method. Usually, a method is employed in which the fluorine-free copolymer composition is diluted by being dispersed in an organic solvent or water, attached to the surface of the treatment target substrate by a known method such as dip coating, spray coating, or foam coating, and then dried (surface treatment).

Examples of the treatment target paper substrate include paper, a container made of paper, and a molded article made of paper (for example, molded pulp).

The fluorine-free copolymer of the present disclosure favorably adheres to the paper substrate.

Paper can be produced by a conventionally known papermaking method. An internal treatment method in which the fluorine-free copolymer composition is added to a pulp slurry before papermaking, or an external treatment method in which the fluorine-free copolymer composition is applied to paper after papermaking, can be used. The method of treatment with the fluorine-free copolymer composition in the present disclosure is preferably an external treatment method.

Size presses for the external treatment method can also be classified in accordance with the coating mode as follows.

One coating mode is a so-called pond-type two-roll size press in which a coating liquid (a sizing liquid) is supplied to a nip part formed when paper is passed between two rubber rolls to create a coating liquid reserve called a pond, and the paper is passed through this coating liquid reserve to apply the sizing liquid to both surfaces of the paper. Another coating mode is a gate roll-type size press and a rod metering size press in which the sizing liquid is applied by being surface-transferred. In the pond-type two-roll size press, the sizing liquid likely reaches the inside of paper, and in the surface transfer type, the sizing liquid components likely stay on the paper surface. With the surface transfer type, the coating layer more likely stays on the paper surface than with the pond-type two-roll size press, and a larger amount of the oil-resistant layer is formed on the surface than with the pond-type two-roll size press.

In the present disclosure, oil-resistant characteristics can be imparted to paper even when the former pond-type two-roll size press is used.

Paper thus treated, after rough drying at room temperature or high temperature, is optionally subjected to a heat treatment that can have a temperature range of up to 300°C, such as up to 200°C, particularly 80°C to 180°C, depending on the properties of the paper, and thus shows excellent oil resistance and water resistance.

The present disclosure can be used in gypsum board base paper, coat base paper, medium quality paper, commonly used liner and corrugating medium, neutral machine glazed paper, neutral liner, rustproof liner and metal laminated paper, Kraft paper, and the like. The present disclosure can also be used in neutral printing writing paper, neutral coated base paper, neutral PPC paper, neutral heat sensitive paper, neutral pressure sensitive base paper, neutral inkjet paper, and neutral communication paper.

A pulp raw material may be any of bleached or unbleached chemical pulp such as Kraft pulp or sulfite pulp, bleached or unbleached high yield pulp such as ground pulp, mechanical pulp, or thermomechanical pulp, and waste paper pulp such as waste newspaper, waste magazine, waste corrugated cardboard, or waste deinked paper. A mixture of the above pulp raw material and synthetic fiber of asbestos, polyamide, polyimide, polyester, polyolefin, polyvinyl alcohol, or the like can be used as well.

A sizing agent can be added to increase the water resistance of paper. Examples of the sizing agent include cationic sizing agents, anionic sizing agents, and rosin-based sizing agents (such as acidic rosin-based sizing agents and neutral rosin-based sizing agents). The amount of the sizing agent may be 0.01 to 5% by weight, based on the pulp.

If necessary, additives which are used in paper making, such as a paper strength additive, a flocculant, a fixing agent, a retention aid, a dye, a fluorescent dye, a slime control agent, and an antifoaming agent, such as starch, modified starch, carboxymethyl cellulose, and polyamide polyamine-epichlorohydrin resin, can be used to such an extent that they are usually used as paper making chemicals. Starch and modified starch are preferably used.

If necessary, by using starch, polyvinyl alcohol, a dye, a coating color, an antislip agent, or the like, the fluorine-free copolymer composition can be applied to paper by a size press, a gate roll coater, a bill blade coater, a calender, or the like.

In the external addition, the amount of the fluorine-free copolymer contained in the oil-resistant layer is preferably 0.01 to 2.0 g/m², particularly 0.1 to 1.0 g/m². The oil-resistant layer is preferably formed from the fluorine-free copolymer together with starch and/or modified starch. The solid content in the oil-resistant layer (comprising the fluorine-free copolymer) is preferably 2 g/m² or less.

In the internal addition, the fluorine-free copolymer and pulp are preferably mixed such that the amount of the fluorine-free copolymer is 0.01 to 50 parts by weight or 0.01 to 30 parts by weight, such as 0.01 to 10 parts by weight, particularly 0.2 to 5.0 parts by weight, based on 100 parts by weight of pulp which forms paper.

In the external and internal additions, the weight ratio of starch and modified starch to the fluorine-free copolymer may be 10:90 to 98:2 or 60:40 to 95:5.

In the external addition, oil resistance can be imparted to paper also by using a so-called pond-type two-roll size press treatment in which the treatment liquid is stored between rolls, and base paper is passed through the treatment liquid between the rolls at a given roll speed and nip pressure.

The fluorine-free copolymer may be nonionic, cationic, anionic, or amphoteric. In the external treatment, the paper substrate may contain an additive such as a sizing agent, a paper strength additive, a flocculant, a retention aid, or a coagulant. The additive may be nonionic, cationic, anionic, or amphoteric. The ionic charge density of the additive is -10,000 to 10,000 µeq/g and preferably -4,000 to 8,000 µeq/g, and more preferably may be -1,000 to 7,000 µeq/g. Additives (solids or active components) such as a sizing agent, a paper strength additive, a flocculant, a retention aid, or a coagulant can be used, in general, in an amount of 0.1 to 10% by weight (such as 0.2 to 5.0% by weight), based on the pulp. In the case of a paper substrate comprising a cationic additive (such as a sizing agent, a paper strength additive, a flocculant, a retention aid, or a coagulant), the oil-resistant agent is preferably anionic.

In the internal treatment, a pulp slurry having a pulp concentration of 0.5 to 5.0% by weight (such as 2.5 to 4.0% by weight) is preferably formed into paper. An additive (such as a sizing agent, a paper strength additive, a flocculant, a retention aid, or a coagulant) and the fluorine-free copolymer can be added to the pulp slurry. Since pulp is generally anionic, at least one of the additive and the fluorine-free copolymer is preferably cationic or amphoteric such that the additive and the fluorine-free copolymer are favorably anchored to paper. A combination of a cationic or amphoteric additive and an anionic fluorine-free copolymer, a combination of an anionic additive and a cationic or amphoteric fluorine-free copolymer, and a combination of a cationic or amphoteric additive and fluorine-free copolymer are preferably used. Paper is made more preferably at an ionic charge density of the additive constituting a sizing agent, a paper strength additive, a flocculant, a retention aid, or a coagulant being -1,000 to 7,000 µeq/g, and paper is made more preferably at an ionic charge density of 100 to 1,000 µeq/g (such as 330 µeq/g, 420 µeq/g, or 680 µeq/g).

Examples of the additive (such as a sizing agent, a paper strength additive, a flocculant, a retention aid, or a coagulant) include alkyl ketene dimer, alkenyl succinic anhydride, a styrenic polymer (a styrene/maleic acid polymer, a styrene/acrylic acid polymer), a ureaformaldehyde polymer, polyethyleneimine, a melamine-formaldehyde polymer, a polyamideamine-epichlorohydrin polymer, a polyacrylamide polymer, a polyamine-type polymer, polydiallyldimethylammonium chloride, an alkylamine-epichlorohydrin condensate, a condensate of alkylene dichloride and polyalkylene polyamine, a dicyandiamide-formalin condensate, a dimethyldiallylammonium chloride polymer, and an olefin/maleic anhydride polymer.

In the present disclosure, the treatment target substrate is treated with the fluorine-free copolymer composition. The "treatment" means that the fluorine-free copolymer composition is applied to the treatment target substrate by dipping, spraying, coating, or the like. By the treatment, the fluorine-free copolymer, which is the active component of the fluorine-free copolymer composition, reaches the inside of the treatment target substrate and/or adheres to the surface of the treatment target substrate.

### Examples

Next, the present disclosure will now be described in detail by way of Examples, and Comparative Examples. However, the description of these does not limit the present disclosure.

Below, a part, %, and a ratio indicate a part by weight, % by weight, and a weight ratio, respectively, unless otherwise specified.

The test methods used below are as follows.

### [Foaming test]

About 50 g of contents to be tested were placed in a 100 ml screw-cap tube, and the container was manually shaken for 10 seconds and then left to stand still to check the foam height. The foam height after 30 minutes was measured, and a foam height of 0 to 3 mm was evaluated as being good, 4 to 10 mm was evaluated as being fair, and 10 mm or more was evaluated as being poor.

### [Evaluation in external method]

As wood pulp, a pulp slurry was prepared which had a weight ratio of LBKP (leaf bleached Kraft pulp) and NBKP (needle bleached Kraft pulp) of 60% by weight and 40% by weight and a pulp freeness (Canadian Standard Freeness) of 400 ml, a paper wet strength additive and a sizing agent were added to this pulp slurry, and paper having a paper density of 0.60 g/cm³ and a basis weight of 42 g/m² made by a fourdrinier paper machine was used as base paper for an external treatment (a size press treatment). This base paper had an oil resistance (a KIT value) of 0 and a water resistance (a Cobb value) of 25 g/m².

### [Preparation of processed paper]

Using the aqueous copolymer dispersion obtained in each Synthesis Example as an oil-resistant agent, oil-resistant paper (processed paper) was obtained. The treatment liquid was prepared such that the solid content concentration of the aqueous polymer dispersion was 2.4% by weight and the solid content concentration of starch was 14% by weight, treated by a size press, and then dried by a drum dryer, and thus oil-resistant paper (processed paper) was obtained. Using the resulting oil-resistant paper as test paper, the Kit test was performed.

Starch was commonly-used hydroxyethylated starch (Penford 290: manufactured by Penford). As for the size press treatment (using a size press machine manufactured by Mathis), a so-called pond-type two-roll size press treatment was used in which the treatment liquid was stored between rolls, and the base paper was passed through the treatment liquid between rolls at a given roll speed and nip pressure.

### [Oil resistance (KIT)]

Oil resistance (the KIT method) was measured in accordance with TAPPI T-559 cm-02. The KIT test liquid is a test liquid obtained by mixing castor oil, toluene, and heptane in a ratio shown in Table 1. One droplet of a test liquid shown in the table below was placed on paper, and the state of oil penetration was observed after 15 seconds. The highest point of oil resistance provided by the KIT test liquid which showed no penetration was regarded as oil resistance. The greater the KIT test liquid number is, the higher the oil resistance is.

### Mixing ratio (vol%)

| *Oil resistance (KIT test liquid) | Castor oil | Toluene | Heptane |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 45 | 55 |
| 12 | 0 | 50 | 50 |

### Synthesis Example 1

A reactor having a volume of 500 ml and equipped with a stirrer, a thermometer, a reflux condenser, a dropping funnel, a nitrogen inlet, and a heater was provided, and 100 parts of a methyl ethyl ketone (MEK) solvent was added. Subsequently, while the solvent was stirred, a monomer composed of 78 parts of stearyl acrylate (StA, melting point: 30°C), 16 parts of hydroxybutyl acrylate (HBA), and 6 parts of methacrylic acid (MAA) (the monomer being 100 parts in total) was added, the mixture was dissolved with heating, then 1.2 parts of PERBUTYL PV (PV) as an initiator was added, and the mixture was mixed by being stirred for 12 hours in a nitrogen atmosphere at 65 to 75°C to carry out copolymerization. The solid content concentration of the resulting copolymer-containing solution was 50% by weight.

Then, 142 g of a 0.3% aqueous NaOH solution was added to 50 g of the resulting copolymer solution and dispersed, then MEK was distilled off under reduced pressure while heating the mixture by using an evaporator, and thus a milky white aqueous copolymer dispersion was obtained (the content of the volatile organic solvent was 1% by weight or less). Moreover, ion-exchanged water was added to the aqueous dispersion, and thus an aqueous dispersion having a solid content concentration of 15% by weight was obtained.

### Synthesis Example 2

Copolymerization and post-treatment were carried out in the same manner as in Synthesis Example 1 except that 78 parts of stearamide ethyl acrylate (C18AmEA, melting point: 70°C) was used instead of StA of Synthesis Example 1 and that 6 parts of dimethylaminoethyl methacrylate (DM) was used instead of MAA, and thus an aqueous dispersion having a solid content concentration of 15% by weight was obtained.

### Synthesis Example 3

To 50 g of a copolymer solution obtained by adding 1 part of polyoxyethylene acetylene glycol ether (acetylene alcohol having the above chemical formula of the acetylene alcohol (2) in which R¹ and R⁴ are isobutyl groups, and R² and R³ are methyl groups) (the average number of moles of ethylene oxide added being 10) to the copolymer-containing solution (200 parts) having a solid content concentration of 50% by weight obtained in Synthesis Example 1, was added 142 g of a 0.3% aqueous NaOH solution and dispersed, then MEK was distilled off under reduced pressure while heating the mixture by using an evaporator, and thus a milky white aqueous copolymer dispersion was obtained (the content of the volatile organic solvent was 1% by weight or less). Moreover, ion-exchanged water was added to the aqueous dispersion, and thus an aqueous dispersion having a solid content concentration of 15% by weight was obtained.

### Synthesis Example 4

The same procedure as in Synthesis Example 3 was repeated except that polyoxyethylene acetylene glycol ether of Synthesis Example 3 was changed to polypropylene glycol (molecular weight 1,200) to give an aqueous dispersion having a solid content concentration of 15% by weight.

### Synthesis Example 5

The same procedure as in Synthesis Example 3 was repeated except that polyoxyethylene acetylene glycol ether of Synthesis Example 3 was changed to a silicone-based antifoaming agent (consisting of silicone oil, silica, and a dispersant) commonly used in papermaking applications to give an aqueous dispersion having a solid content concentration of 15% by weight.

### Synthesis Example 6

To 50 g of an aqueous copolymer dispersion obtained by adding 1 part of polyoxyethylene acetylene glycol ether (acetylene alcohol having the above chemical formula of the acetylene alcohol (2) in which R¹ and R⁴ are isobutyl groups, and R² and R³ are methyl groups) (the average number of moles of ethylene oxide added being 10) to the copolymer-containing aqueous dispersion obtained in Synthesis Example 2, was added 142 g of a 0.4% aqueous acetic acid solution and dispersed, then MEK was distilled off under reduced pressure while heating the mixture by using an evaporator, and thus a milky white aqueous copolymer dispersion was obtained (the content of the volatile organic solvent was 1% by weight or less). Moreover, ion-exchanged water was added to the aqueous dispersion, and thus an aqueous dispersion having a solid content concentration of 15% by weight was obtained.

### Synthesis Example 7

The same procedure as in Synthesis Example 6 was carried out except that polyoxyethylene acetylene glycol ether of Synthesis Example 6 was changed to polypropylene glycol (molecular weight 1,200) to give an aqueous dispersion having a solid content concentration of 15% by weight.

### Synthesis Example 8

The same procedure as in Synthesis Example 6 was repeated except that polyoxyethylene acetylene glycol ether was changed to a silicone-based antifoaming agent (consisting of silicone oil, silica, and a dispersant) used in papermaking applications to give an aqueous dispersion having a solid content concentration of 15% by weight.

### Synthesis Example 9

The same procedure as in Synthesis Example 8 was repeated except that the amount of the silicone-based antifoaming agent was changed to 0.1 parts to give an aqueous dispersion having a solid content concentration of 15% by weight.

### Reference Example 1

A treatment liquid was prepared such that the solid content of the aqueous copolymer dispersion as obtained in Synthesis Example 1 was 2.4% by weight and that the solid content concentration of starch was 14% by weight, and a foaming test and an external treatment were carried out on the treatment liquid. Moreover, a foaming test was carried out on the aqueous copolymer dispersion itself (product). The results are shown in Table 1.

### Reference Example 2

The same procedure as in Reference Example 1 was repeated except that the aqueous copolymer dispersion of Synthesis Example 2 was used instead of the aqueous copolymer dispersion of Synthesis Example 1. The results are shown in Table 1.

### Comparative Example 1

The same procedure as in Reference Example 1 was repeated except that starch was solely used without using the aqueous copolymer dispersion of Synthesis Example 1. The results are shown in Table 1.

### Comparative Example 2

The same procedure as in Reference Example 1 was repeated except that a paraffine wax dispersion was used instead of the aqueous copolymer dispersion of Synthesis Example 1. The results are shown in Table 1.

### Comparative Example 3

The same procedure as in Reference Example 1 was repeated except that the aqueous dispersion of a fluorine-containing acrylic polymer was used in a solid content of 0.4% by weight instead of the aqueous copolymer dispersion of Synthesis Example 1. The results are shown in Table 1.

### [Table 1]

**Table 1**

| No. | Reference Example 1 | Reference Example 2 | Comparative Example 1 | Comparative Example 2 | Comparative Example 3 |
|---|---|---|---|---|---|
| Foaming test of product | Poor | Fair | - | Good | Good |
| Foaming test of treatment liquid | Poor | Poor | Good | Good | Good |
| Oil resistance KIT test | 4 | 5 | 0 | 3 | - |

### Example 1

A treatment liquid was prepared such that the solid content of the water copolymer dispersion obtained in Synthesis Example 3 was 2.4% by weight and that the solid content concentration of starch was 14% by weight, and a foaming test and an external treatment were carried out on the treatment liquid.

### Comparative Example 4

A foaming test and an external treatment were carried out in the same manner as in Example 1 except that the aqueous copolymer dispersion of Synthesis Example 4 was used instead of the aqueous copolymer dispersion of Synthesis Example 3. The results are shown in Table 2.

### Comparative Example 5

A foaming test and an external treatment were carried out in the same manner as in Example 1 except that the aqueous copolymer dispersion of Synthesis Example 5 was used instead of the aqueous copolymer dispersion of Synthesis Example 1. The results are shown in Table 2.

### Example 2

A foaming test and an external treatment were carried out in the same manner as in Example 1 except that the aqueous copolymer dispersion of Synthesis Example 6 was used instead of the aqueous copolymer dispersion of Synthesis Example 1. The results are shown in Table 2.

### Comparative Example 6

A foaming test and an external treatment were carried out in the same manner as in Example 1 except that the aqueous copolymer dispersion of Synthesis Example 7 was used instead of the aqueous copolymer dispersion of Synthesis Example 1. The results are shown in Table 2.

### Comparative Example 7

A foaming test and an external treatment were carried out in the same manner as in Example 1 except that the aqueous copolymer dispersion of Synthesis Example 8 was used instead of the aqueous copolymer dispersion of Synthesis Example 1. The results are shown in Table 2.

### Comparative Example 8

A foaming test and an external treatment were carried out in the same manner as in Example 1 except that the aqueous copolymer dispersion of Synthesis Example 9 was used instead of the aqueous copolymer dispersion of Synthesis Example 1. The results are shown in Table 2.

### [Table 2]

**Table 2**

| No. | Example 1 | Comparative Example 4 | Comparative Example 5 | Example 2 | Comparative Example 6 | Comparative Example 7 | Comparative Example 8 |
|---|---|---|---|---|---|---|---|
| | Synthesis Example 3 | Synthesis Example 4 | Synthesis Example 5 | Synthesis Example 6 | Synthesis Example 7 | Synthesis Example 8 | Synthesis Example 9 |
| Foaming test of treatment liquid | Good | Poor | Good | Good | Poor | Good | Fair |
| Oil resistance KIT test | 5 | 4 | 3 | 6 | 5 | 4 | 5 |

### Industrial Applicability

The fluorine-free copolymer composition of the present disclosure is applicable to paper for use in a food container and a food packaging material.

## Claims

1. A fluorine-free copolymer composition comprising:
(1) a fluorine-free copolymer, and
(2) an acetylene alcohol.

2. The fluorine-free copolymer composition according to claim 1, wherein the fluorine-free copolymer (1) is a fluorine-free copolymer having:
a repeating unit formed from (a) an acrylic monomer having a long-chain hydrocarbon group having 7 to 40 carbon atoms.

3. The fluorine-free copolymer composition according to claim 2, wherein the fluorine-free copolymer (1) is the fluorine-free copolymer further having:
a repeating unit formed from (b) an acrylic monomer having a hydrophilic group.

4. The fluorine-free copolymer composition according to any one of claims 1 to 3, wherein the acrylic monomer having a long-chain hydrocarbon group (a) is a monomer represented by a formula:
CH₂-C(-X¹)-C(=O)-Y¹(R¹)ₖ
wherein
R¹ is each independently a hydrocarbon group having 7 to 40 carbon atoms,
X¹ is a hydrogen atom, a monovalent organic group, or a halogen atom,
Y¹ is a divalent to tetravalent group composed of at least one selected from a hydrocarbon group having one carbon atom, -C₆H₄-, -O-, -C(=O)-, -S(=O)₂-, or -NH-, provided that a hydrocarbon group is excluded, and
k is 1 to 3.

5. The fluorine-free copolymer composition according to claim 4, wherein in the acrylic monomer having a long-chain hydrocarbon group (a), X¹ is a hydrogen atom, and R¹ has 18 or more carbon atoms.

6. The fluorine-free copolymer composition according to any one of claims 1 to 5, wherein the acrylic monomer having a long-chain hydrocarbon group (a) is:
(a1) an acrylic monomer represented by a formula:
CH₂=C(-X⁴)-C(=O)-Y²-R²
wherein
R² is a hydrocarbon group having 7 to 40 carbon atoms,
X⁴ is a hydrogen atom, a monovalent organic group, or a halogen atom, and
Y² is -O- or -NH-, and/or
(a2) an acrylic monomer represented by a formula:
CH₂=C(-X⁵)-C(=O)-Y³-Z(-Y⁴-R³)ₙ
wherein
R³ is each independently a hydrocarbon group having 7 to 40 carbon atoms,
X⁵ is a hydrogen atom, a monovalent organic group, or a halogen atom,
Y³ is -O- or -NH-,
Y⁴ is each independently a direct bond, or a group composed of at least one selected from -O-, -C(=O)-, - S(=O)₂-, or -NH-,
Z is a direct bond or a divalent or trivalent hydrocarbon group having 1 to 5 carbon atoms, and
n is 1 or 2.

7. The fluorine-free copolymer composition according to any one of claims 3 to 6, wherein the acrylic monomer having a hydrophilic group (b) is at least one oxyalkylene (meth)acrylate represented by a formula:
CH₂=CX²C(=O)-O-(RO)ₙ-X³ (b1)
CH₂=CX²C(=O)-O-(RO)ₙ-C(=O)CX²=CH₂ (b2)
, and/or
CH₂=CX²C(=O)-NH-(RO)ₙ-X³ (b3)
wherein
X² is a hydrogen atom or a methyl group,
X³ is a hydrogen atom or an unsaturated or saturated hydrocarbon group having 1 to 22 carbon atoms,
R is each independently an alkylene group having 2 to 5 carbon atoms, and
n is an integer of 1 to 90.

8. The fluorine-free copolymer composition according to any one of claims 3 to 7, wherein the fluorine-free copolymer (1) further has:
a repeating unit formed from (c) an acrylic monomer having an olefinic carbon-carbon double bond and an ion donating group.

9. The fluorine-free copolymer composition according to claim 8, wherein the acrylic monomer having an ion donating group (c) is:
(c1) an acrylic monomer having at least one anion donating group selected from the group consisting of a carboxyl group, a sulfonic acid group, and a phosphoric acid group, or
(c2) an acrylic monomer having a cation donating group which is an amino group.

10. The fluorine-free copolymer composition according to claim 9, wherein
the acrylic monomer having an anion donating group (c1) is at least one compound selected from the group consisting of (meth)acrylic acid, crotonic acid, maleic acid, fumaric acid, itaconic acid, citraconic acid, vinylsulfonic acid, (meth)allylsulfonic acid, styrenesulfonic acid, phosphoric acid (meth)acrylate, vinylbenzenesulfonic acid, acrylamide tert-butylsulfonic acid, and a salt thereof, and
the acrylic monomer having a cation donating group (c2) is at least one compound selected from the group consisting of dimethylaminoethyl (meth)acrylate, diethylaminoethyl (meth)acrylate, and a salt thereof.

11. The fluorine-free copolymer composition according to any one of claims 8 to 10, wherein an amount of the repeating unit formed from the monomer (a) is 30 to 95% by weight, an amount of the repeating unit formed from the monomer (b) is 5 to 70% by weight, and an amount of the repeating unit formed from the monomer (c) is 0.1 to 30% by weight, based on the fluorine-free copolymer.

12. The fluorine-free copolymer composition according to any one of claims 1 to 11, wherein
the acetylene alcohol (2) is a compound represented by a formula: 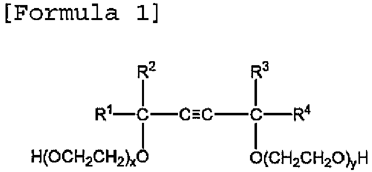 wherein
R¹ and R⁴ are each independently a hydrogen atom or an alkyl group having 1 to 10 carbon atoms,
R² and R³ are each independently a hydrogen atom, a methyl group, or an ethyl group, and
x and y are each independently a number of 0 to 100.

13. The fluorine-free copolymer composition according to any one of claims 1 to 12, wherein an amount of the acetylene alcohol (2) is 0.1 to 20 parts by weight, based on 100 parts by weight of the fluorine-free polymer (1).

14. An oil-resistant agent comprising the fluorine-free copolymer composition according to any one of claims 1 to 13 .

15. An oil-resistant agent kit comprising:
a liquid comprising (1) a fluorine-free copolymer; and
(2) an acetylene alcohol.

16. A method for producing the fluorine-free copolymer composition according to any one of claims 1 to 13, the method comprising:
polymerizing an acrylic monomer having a long-chain hydrocarbon group and an acrylic monomer having a hydrophilic group to give a fluorine-free copolymer, and
adding an acetylene alcohol to the fluorine-free copolymer.

17. Oil-resistant paper comprising the fluorine-free copolymer of the fluorine-free copolymer composition according to any one of claims 1 to 13, in the paper and/or on a surface of the paper.

18. The oil-resistant paper according to claim 17, which is a food packaging material or a food container.

19. A method for eliminating foam during treatment, the method comprising treating paper with the fluorine-free copolymer composition according to any one of claims 1 to 13 .
